# EUROPEAN PATENT APPLICATION

(11) **EP 0 697 508 A2**
(43) Date of publication of application: **21.02.1996**
(21) Application number: 95305413.7
(22) Date of filing: 02.08.1995
(51) Int. Cl.: F02D 11/10, B60K 41/04

(54) **Throttle control system in combination with an automated mechanical transmission system**

(30) Priority: 19.08.1994 GB 9416839
(71) Applicant: EATON CORPORATION, Cleveland Ohio 44114 (US)
(72) Inventor: Bates, Ian Richard Joseph, Huddersfield, W. Yorkshire HD3 3XZ (GB); Chan, Kwok Wah, Chorley, Lancashire PR7 2YA (GB)
(74) Representative: Clarke, Geoffrey Howard

(57) **Abstract**

A control method/system for controlling throttle recovery in a vehicular automated transmission system (10) including an electronically cnotrolled engine (14) having an engine controller (ECU_{E}) generating a signal indicative of an optimal engine fueling value (54). During throttle recovery, fueling is commanded to continuously decrease the difference (58) between current engine fueling (56) and the optimal engine fueling value.

## Description

### BACKGROUND OF THE INVENTION

### Field of the Invention

The present invention relates to vehicular automated transmission systems and, in particular, to vehicular automated mechanical transmission systems including a fuel-controlled internal combustion engine connected by a non-positive coupling to a multiple-speed mechanical transmission. More particularly, the present invention relates to control of fueling of the internal combustion engine utilized in vehicular automated mechanical transmission systems.

### Description of the Prior Art

Fully and partially automated mechanical transmission systems are well known in the prior art, as may be seen by reference to U.S. Pats. No. 4,081,065; 4,361,060; 4,648,290; 4,850,236; 4,595,986; 5,109,721; 5,157,607 and 5,316,116.

In such systems, during start-from-stop and/or during gear-change operations, the transmission system control supplies fuel to the engine in a predetermined manner, regardless of the operator's positioning of the throttle pedal. Upon completion of an operation, the engine will again be fueled as requested by the operator, *i.e.*, as indicated by throttle pedal position. The process by which fueling of the engine is transitioned from a controller-determined amount to an operator-determined amount is called "throttle recovery." In the prior art, during the throttle recovery operation, fueling generally was returned to the amount requested by the operator in a substantially straight-line manner. This method, especially at the completion of a vehicle launch operation, may result in degraded engine performance and, thus, was not totally satisfactory.

### SUMMARY OF THE INVENTION

In accordance with the present invention, the drawbacks of the prior art are overcome by providing a throttle recovery method/system wherein an electronic engine controller-generated optimal engine fueling request is sensed and fueling is caused to increasingly approach the engine controller-generated optimal fueling amount.

Accordingly, it is an object of the present invention to provide an improved throttle recovery control method/system for automated mechanical transmission systems equipped with an electronically controlled engine of the type having an engine controller generating a signal indicative of an optimal fueling value for currently sensed conditions.

This and other objects and advantages of the present invention will become apparent from a reading of the following description of the preferred embodiment taken in connection with the attached drawings.

### BRIEF DESCRIPTION OF THE DRAWINGS

Figure 1 is a schematic illustration of a vehicular automated mechanical transmission system.

Figure 2 is a schematic illustration of a prior art throttle recovery operation.

Figure 3 is a schematic illustration of the throttle recovery operation of the present invention.

### DESCRIPTION OF THE PREFERRED EMBODIMENT

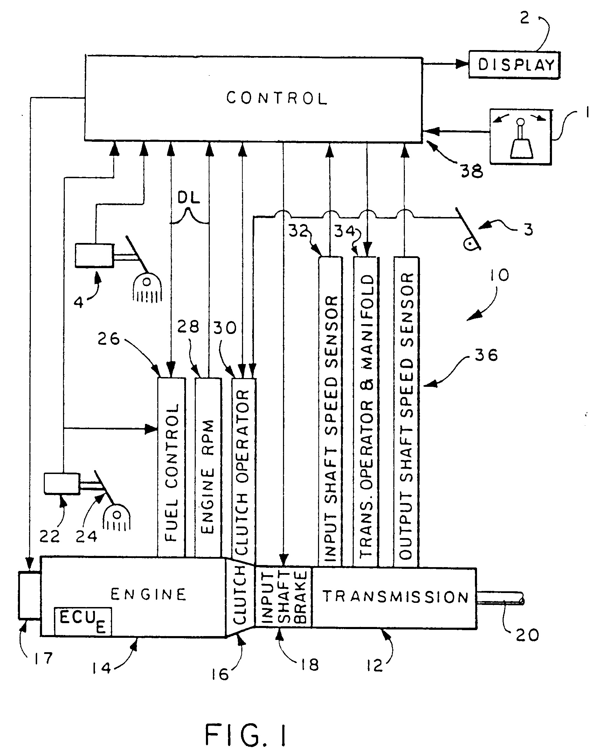

A typical vehicular automated mechanical transmission system of the type disclosed in aforementioned U.S. Pat. No. 4,648,290 is illustrated in Figure 1. Referring to Figure 1, the position of a driver-operated throttle 24 is sensed at sensor 22 and fed to a central processing unit 38, which also receives inputs relative to engine speed from sensor 28 and/or transmission input shaft speed from sensor 32, transmission output shaft speed from sensor 36, and positive or negative actuations of the driver's gear shift lever, or "joy stick" 1, to be described in greater detail below. It is understood that engine speed is an indication of transmission input shaft speed, and vice versa, especially if clutch 16 is non-slippingly engaged, while transmission output shaft speed is an indication of vehicle speed.

Control logic circuits, sensors, and actuators for the transmission system 10 may be as disclosed in U.S. Pat. No. 4,361,060. Specifically, central processing unit 38 receives inputs, processes same in accordance with predetermined logic rules, and provides command output signals to pneumatic and/or electrical actuators for control of an exhaust brake 17 and/or an input shaft brake 18 for rapid upshifts, and automatic fuel control 26 to "blip" and "dip" the supply of fuel to the engine 14 to achieve rapid synchronous rotation preparatory to a downshift or upshift, clutch control via operator 30, and ratio shifting via transmission operator 34. The central processing unit also sends command output signals to the display 2. The semi-automatic transmission system 10 additionally may comprise a usual foot-operated manual clutch control 3 intended for use only for start-from-rest and/or low-speed creeping, maneuvering situations. Preferably, the clutch will be fully automated, as illustrated in aforementioned U.S. Pats. No. 4,081,065; 4,361,060 and/or 5,316,116, and clutch pedal 3 will be eliminated. The control 38 may receive signals indicative of manual clutch control 3 position and of actuation of the vehicle brakes 4.

Engine 14 is electronically controlled and may communicate over an electronic data link conforming to SAE J1922, SAE J 1939 and/or ISO 9141 protocols.

To shift transmission 12, the driver moves lever 1 forward (for upshifts) and rearward (for downshifts) from the position illustrated in Figure 1. It is understood that a single control lever movable forward and backward in a given direction to select a forward and reverse mode of operation, and then movable in a transverse direction to select upshifts and downshifts either single or multiple, of the type disclosed in U.S. Pat. No. 4,442,730, may be substituted for the control lever 1 illustrated.

The structure of a 12-forward-speed, splitter-type transmission 12, and of the blocked jaw clutch members utilized in the auxiliary transmission section of transmission 12, is known in the prior art and may be appreciated in greater detail by reference to U.S. Pats. No. 3,799,002; 3,921,469; 3,924,848; 4,194,410; 4,440,037; and to published European Pat. Apps. EP-A-0071353 and EP-A-0117342.

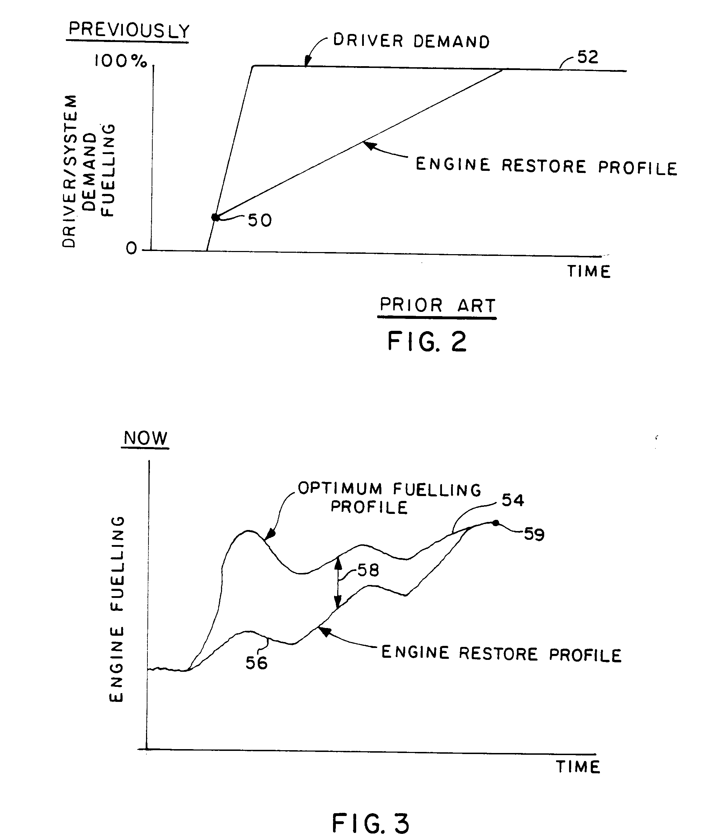

As is well known in such automated transmission systems, to break torque, to cause synchronous conditions and/or to achieve a smooth vehicle launch, at certain times, the controller 38 will control fueling of the engine according to predetermined logic rules independent of the position of the throttle pedal 24. For example, fueling may be controlled to achieve a selected engine speed and/or engine torque, regardless of throttle pedal position. Upon completion of such operations, fueling control is returned to the operator (*i.e*., fuel is supplied in proportion to the displacement of throttle pedal 24) in a throttle recovery operation. In the prior art, throttle recovery was done in a substantially straight-line technique (see Figure 2) wherein the fueling of the engine was ramped up at a substantially constant rate from the controller-dictated amount 50 to the operator-requested amount 52. This did not always provide smooth engine performance.

With the advent of electronically controlled engines, engine controllers ECU_{E} receive various inputs, including throttle pedal position, and generate an optimal fuel value, 54, which incorporates the particularities of the individual engine and the values of sensed inputs, such as inputs indicative of engine torque values, engine speed, vehicle load, engaged gear ratio and the like.

In accordance with the present invention (see Figure 3), an improved throttle recovery operation is achieved by sensing the engine-generated optimal fueling value 54, the current fueling value 56, and commanding fueling such that the difference 58 between the optimal fueling value and the current fueling value is steadily decreased to zero (point 59 on Figure 3).

The foregoing has been found to provide a smooth throttle recovery operation without degrading the performance of the engine 14.

Although the preferred embodiment of the present invention has been described with a certain degree of particularity, various changes to form and detail may be made without departing from the spirit and scope of the invention as hereinafter claimed.

## Claims

1. A method of controlling a throttle recovery operation in an automated mechanical transmission system (10) comprising an electronically controlled engine (14) having a controller (ECU_{E}) for generating a signal indicative of an optimal engine fueling value (54), a multiple-speed mechanical transmission (12) drivingly connected to the engine by a non-positive coupling and a system controller (38) for receiving inputs and for processing same according to predetermined logic rules to issue command output signals to system actuators, including an actuator (26) for controlling fueling of said engine, said method characterized by:
receiving said signal indicative of optimal engine fueling value; and
during throttle recovery operation, commanding fueling of said engine as a function of said optimal engine fueling value.

2. The method of claim 1, additionally comprising sensing the value (56) of current fueling of said engine and wherein fueling of said engine is commanded to continuously diminish the difference (58) between said optimal engine fueling value (54) and said current fueling value (56).

3. The method of claim 2 wherein said engine is connected to an electronic data link (DL) of the type defined in SAE J1922, SAE J1939 or ISO 9141.

4. A system of controlling a throttle recovery operation in an automated mechanical transmission system (10) comprising an electronically controlled engine (14) having a controller (ECU_{E}) for generating a signal indicative of an optimal engine fueling value (54), a multiple-speed mechanical transmission (12) drivingly connected to the engine by a non-positive coupling and a system controller (38) for receiving inputs and for processing same according to predetermined logic rules to issue command output signals to system actuators, including an actuator (26) for controlling fueling of said engine, said system characterized by:
means for receiving said signal indicative of optimal engine fueling value; and
means effective, during throttle recovery operation, for commanding fueling of said engine as a function of said optimal engine fueling value.

5. The system of claim 4, additionally comprising means for sensing the value (56) of current fueling of said engine and wherein fueling of said engine is commanded to continuously diminish the difference (58) between said optimal engine fueling value (54) and said current fueling value (56).

6. The system of claim 5 wherein said engine is connected to an electronic data link (DL) of the type defined in SAE J1922, SAE J1939 or ISO 9141.

7. The method of claim 1 wherein said optimal engine fueling value is a function of sensed throttle pedal position.

8. The system of claim 4 wherein said optimal engine fueling value is a function of sensed throttle pedal position.
